# DEMANDE DE BREVET EUROPEEN

(11) **EP 1 092 378 A1**
(43) Date de publication de la demande: **18.04.2001**
(21) Numéro de dépôt: 99120443.9
(22) Date de dépôt: 14.10.1999
(51) Int. Cl.: A47J 31/44, A47J 31/06

(54) **Machine à café à dispositif de distribution de vapeur intégré**

(71) Demandeur: SOCIETE DES PRODUITS NESTLE S.A., 1800 Vevey (CH)
(72) Inventeur: La désignation de l'inventeur n'a pas encore été déposée
(74) Mandataire: Micheli & Cie

(57) **Abrégé**

Machine à café de type "expresso" comprenant un réservoir d'eau, une pompe, un bloc thermique ainsi que des circuits d'acheminement d'eau chaude et de vapeur vers un embout de percolation (2). La machine comprend en outre un dispositif de distribution de vapeur (3) intégré qui comprend une entrée de vapeur (12) connectée au circuit d'amenée de vapeur et une sortie de vapeur (10). Le circuit de distribution de vapeur comporte un corps cylindrique (14) muni d'une ouverture reliée à l'entrée de vapeur (12) ainsi qu'une pièce cylindrique (13) qui peut se déplacer dans le corps (14) pour ouvrir, respectivement fermer, le circuit de vapeur selon sa position dans le corps (14). Un organe de commande actionné par l'intermédiaire d'un doigt de commande (17) permet d'amener la sortie de vapeur (10) en contact avec l'ouverture (9) du couvercle (4) d'un récipient (5).

## Description

La présente invention concerne une machine à café et plus particulièrement une machine à café comprenant un dispositif intégré permettant de distribuer de la vapeur afin de chauffer et d'émulsifier un liquide. La machine à café objet de l'invention est donc particulièrement adaptée pour la confection de cappuccino qui sont obtenus par adjonction de lait chaud et mousseux dans le café. Certaines machines à café de type 'expresso' classique comportent, en plus des composants nécessaires à la préparation du café, une buse vapeur émergeant du boîtier de la machine. Un commutateur permet généralement de sélectionner le mode de fonctionnement de la machine. Dans un premier mode de fonctionnement, l'eau contenue dans le réservoir est aspirée par une pompe qui la dirige vers un bloc thermique permettant son échauffement. L'eau chaude est ensuite délivrée vers un embout de percolation sur lequel est fixé un dispositif porte-filtre ou porte-capsule contenant le café moulu. Dans un second mode de fonctionnement, l'eau chaude est amenée vers la buse vapeur afin de produire soit de l'eau chaude, soit de la vapeur.

Pour chauffer et émulsifier un liquide tel que du lait, il est nécessaire de plonger la buse vapeur dans un récipient contenant le liquide à chauffer.

Ces machines présentent des inconvénients en matière d'entretien et de facilité d'utilisation. Pour chauffer ou émulsifier un liquide, il est nécessaire d'amener le récipient contenant le liquide sous la buse et de le maintenir dans une position telle que l'extrémité distale de la buse soit immergée dans le liquide. La vapeur jaillissant de la buse provoque des projections si elle n'est pas complètement immergée dans le récipient ou si ce dernier ne contient pas suffisamment de liquide.

Un autre inconvénient provient du fait que la buse vapeur est solidaire du bâti de la machine à café. Elle ne peut en conséquence être démontée en vue de son nettoyage, ce qui peut incidemment induire des problèmes d'ordre hygiénique.

La présente invention a pour but de remédier aux inconvénients mentionnés ci-dessus en proposant une machine à café de type "expresso" comportant un dispositif intégré permettant d'émulsifier un liquide tel que du lait par exemple. Ce dispositif est extrêmement simple à utiliser, d'un entretien aisé et permet d'éviter toute projection de liquide indésirable.

Ce but est atteint par une machine à café qui se distingue par les caractéristiques énoncées à la revendication 1.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution d'une machine à café selon l'invention.

La figure 1 est une vue de face d'une machine à café selon l'invention, le récipient contenant le liquide à émulsifier étant en position de service.

La figure 2 est une vue en coupe selon la ligne A-A de la figure 1.

La figure 3 est une vue en coupe du dispositif de distribution de vapeur en position de repos.

La figure 4 est une vue en coupe d'une variante du récipient coopérant avec le dispositif de distribution de vapeur de la machine à café illustrée à la figure 1.

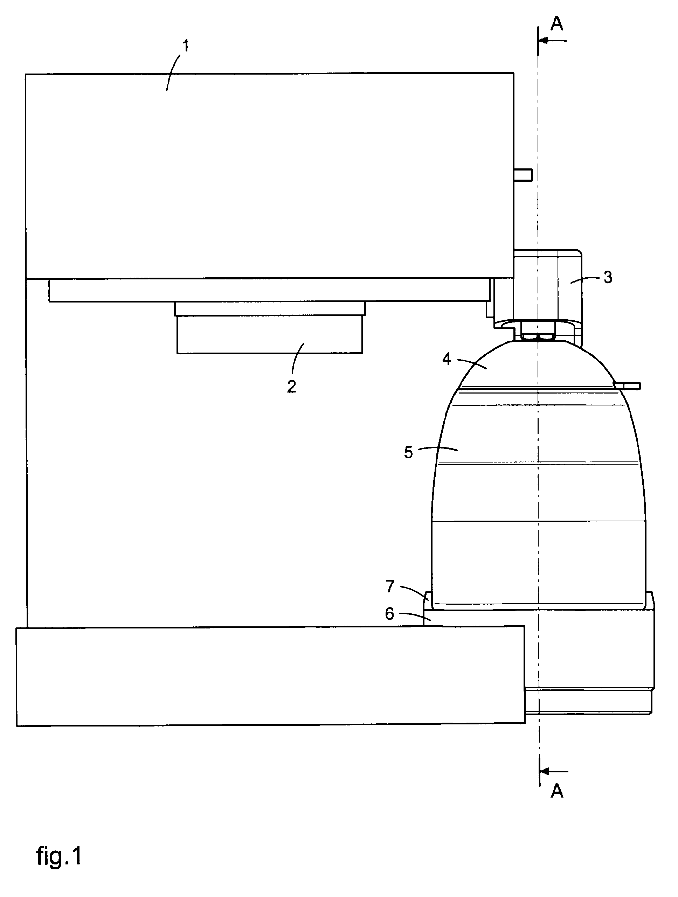

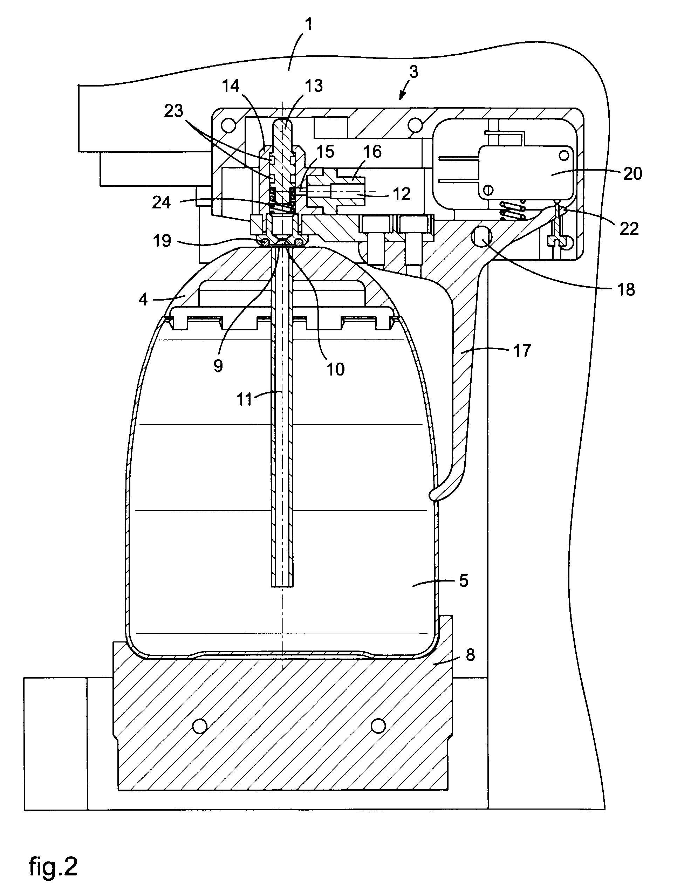

En référence aux figures 1 et 2, la machine à café comprend un bâti 1 intégrant les composants classiques d'une machine à café de type "expresso", tels qu'un réservoir d'eau, une pompe, un bloc thermique, des circuits d'acheminement d'eau et de vapeur, ainsi que les organes ou boutons de commande permettant de sélectionner et d'activer les diverses fonctions prévues. Le fonctionnement des machines de ce type étant largement décrit dans l'art antérieur, il ne sera pas repris dans la présente demande.

La machine à café présente un embout de percolation 2 destiné à recevoir un porte-filtre ou un porte-capsule contenant le café moulu. Elle comporte en outre un dispositif de distribution de vapeur 3 qui coopère avec le couvercle 4 d'un récipient 5. Le récipient 5, en position de service, repose sur un socle 6 solidaire de la partie inférieure du bâti 1. Le socle 6 présente des bords latéraux 7 surélevés de manière à favoriser le guidage du récipient 5 lors de sa mise en place en position de service. La partie arrière 8 du socle 6 présente également une surépaisseur agissant comme un organe d'arrêt ou butée de fin de course. Grâce à sa forme particulière, le socle permet de positionner facilement et précisément le récipient 5 dans le logement délimité par les bords latéraux 7 et le fond 8 du socle de manière à ce que l'ouverture 9 du couvercle 4 soit en regard de la sortie de vapeur 10 du dispositif de distribution de vapeur 3.

Le couvercle 4 du récipient 5 est équipé d'un tube de vapeur 11 qui permet d'acheminer la vapeur à l'intérieur du récipient 5. Le tube de vapeur 11 présente une longueur comprise entre la moitié et les neuf-dixièmes de la profondeur du récipient 5. De préférence le tube 11 présente une longueur qui correspond environ aux quatre-cinquièmes de la profondeur du récipient 5 de manière à pouvoir être utilisé lorsque le récipient 5 n'est que partiellement rempli.

Le dispositif de distribution de vapeur 3 comporte une entrée de vapeur 12 connectée au circuit de distribution de vapeur (non représenté). L'entrée de vapeur 12 communique par l'intermédiaire d'un raccord d'admission de vapeur 16 avec une soupape formée de la pièce cylindrique 13 qui peut coulisser librement dans le corps cylindrique 14. Le corps cylindrique 14 présente une ouverture radiale 15 qui débouche dans le raccord d'admission de vapeur 16. Le corps cylindrique 14 présente une ouverture sur sa partie supérieure qui permet à la partie supérieure de la pièce cylindrique 13 d'émerger hors du corps 14. L'ensemble formé par le corps cylindrique 14 qui reçoit le raccord 16 peut se déplacer sous l'action d'un organe de commande muni d'un doigt de commande 17 pivoté autour d'un axe 18. La pièce cylindrique 13 présente dans sa partie centrale un diamètre sensiblement égal au diamètre interne du corps 14. Deux gorges annulaires 23 sont usinées dans la partie centrale de la pièce 13 et sont destinées à accueillir des joints d'étanchéité de type o-ring. Les parties inférieure et supérieure de la pièce 13 présentent un diamètre inférieur à celui du diamètre interne du corps 14. Ce diamètre réduit correspond sensiblement à celui de l'ouverture située sur la partie supérieure du corps cylindrique 14, de telle sorte que la pièce 13 puisse émerger hors du corps 14 selon la position de l'ensemble (voir fig. 2). Un organe élastique, tel qu'un ressort 24, est agencé dans la partie inférieure du corps 14 et exerce son action de manière à forcer la position de la pièce cylindrique 13 vers le haut dans le corps 14. Dans la position de service illustrée à la figure 2, la partie supérieure de la pièce 13, soumise à l'action du ressort 24, émerge du corps 14. Dans cette position, l'ouverture radiale 15 du corps 14 est en regard de la partie inférieure de la pièce 13, en dessous des joints logés dans les gorges 23 et de ce fait permet le passage de la vapeur depuis le raccord d'admission 16 connecté à l'entrée de vapeur 12, vers la sortie de vapeur 10.

La partie inférieure du corps 14, formant la sortie de vapeur 10, entre en contact avec l'ouverture 9 du couvercle 4 en position de service. Un logement annulaire dans lequel est prévu un joint de type o-ring 19 assure l'étanchéité entre la sortie de vapeur 10 et l'ouverture 9 du couvercle 4.

L'autre extrémité de l'organe de commande par rapport au point de pivotement comporte un bec 22 qui actionne un micro-interrupteur 20 commandant la production de vapeur.

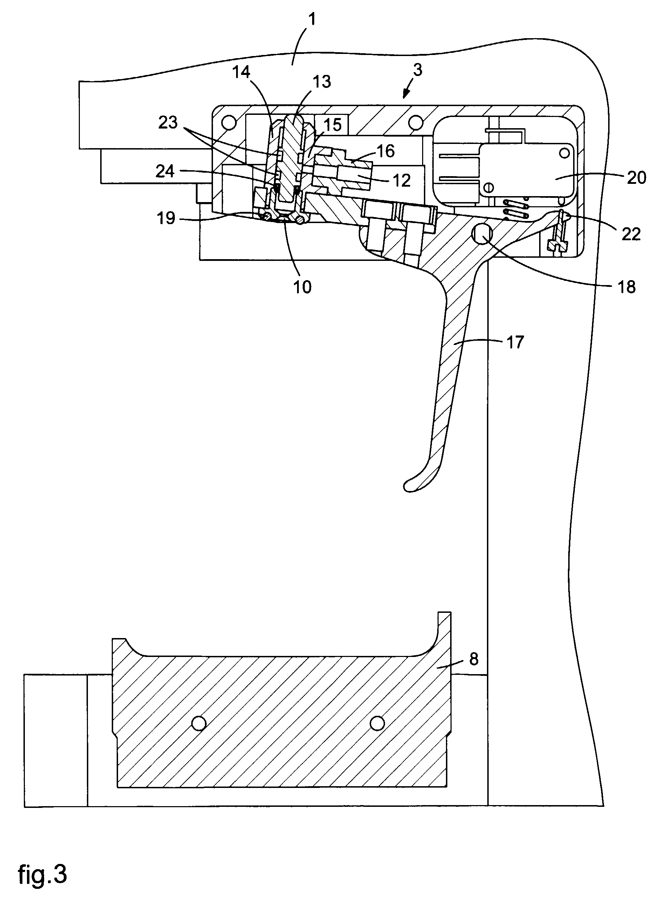

Lorsque le récipient 5 est retiré de son logement 6,7,8, le doigt de commande 17 revient en position de repos sous l'action d'un organe élastique en pivotant autour de l'axe 18. Ce faisant il déplace l'ensemble des pièces 13,14,16 vers le haut qui se retrouvent alors dans la position illustrée à la figure 3. Dans cette position, la pièce 13, butant contre le bâti du dispositif, est forcée contre l'action du ressort 24, à l'intérieur du corps 14. L'ouverture 15 se trouve alors en regard de la partie centrale de la pièce cylindrique 13, les joints situés dans les gorges 23 se trouvant de part et d'autre de l'ouverture 15, garantissant ainsi la fermeture étanche du circuit de vapeur.

D'autre part, le bec 22 de l'organe de commande n'est plus en contact avec le micro-interrupteur 20 et déclenche ainsi la production de vapeur.

Le couvercle 4 du récipient 5 sera de préférence muni de moyens de maintien qui permettent de le fixer de manière étanche sur le récipient 5. Tous moyens connus tels qu'un pas de vis ou des systèmes de fermeture à clips peuvent être envisagés.

L'utilisation est ainsi très simple puisqu'il suffit de remplir le récipient 5 de liquide, de le fermer avec le couvercle 4, puis de le positionner dans le logement prévu du support. Lorsque le récipient 5 atteint le fond du logement, il agit sur le doigt de commande 17 qui abaisse progressivement le corps 14 jusqu'à ce que la sortie de vapeur 10 soit positionnée en regard de l'ouverture 9 située sur le dessus du couvercle 4. Dans cette position, le circuit de vapeur est ouvert et la vapeur peut, en traversant le tube 11, émulsifier le liquide contenu dans le récipient.

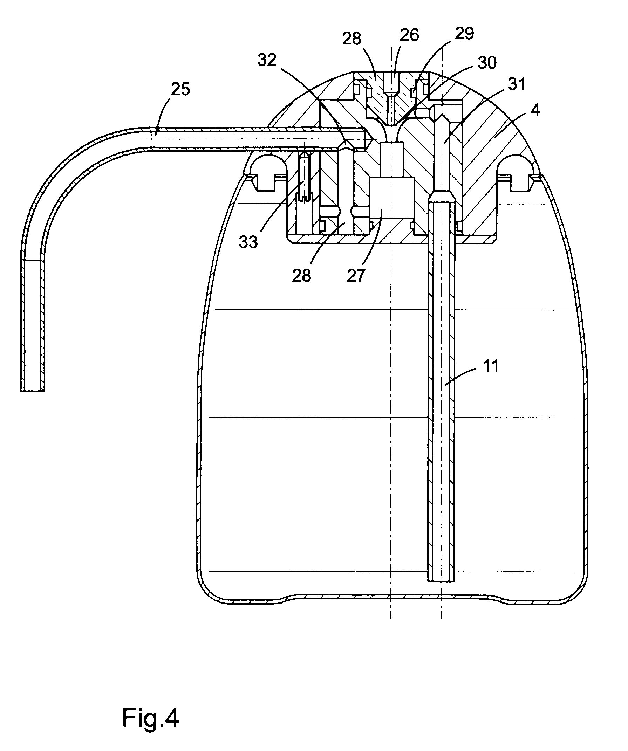

La figure 4 illustre une variante du récipient 5 qui comporte dans son couvercle 4 un dispositif pour délivrer le liquide émulsifié directement dans une tasse à travers une buse de sortie 25. Dans cette variante, l'admission de vapeur se fait par l'intermédiaire d'un conduit d'admission 26 dans une chambre d'admission 27 qui présente dans sa partie basse une ouverture débouchant dans un conduit 28, lui-même relié à la buse de sortie 25. La pièce 28 qui comprend l'admission 26 présente une gorge annulaire 29 destinée à recevoir un joint d'étanchéité. En dessous de ce joint, la pièce 28 présente, dans sa partie inférieure, une section tronconique qui ménage un passage 30 de faible dimension entre le conduit 31 qui relie le tube de vapeur 11 et la chambre d'admission 27. Lorsque la vapeur est injectée par le conduit d'amission 26 dans la chambre 27, le liquide contenu dans le récipient est aspiré par effet venturi, à travers le tube de vapeur 11, le conduit 31 et le passage 30 vers la chambre 27. Dans la chambre 27, le liquide s'émulsifie sous l'effet de la pression, puis le mélange vapeur liquide s'échappe à travers le conduit 28 vers la buse de sortie 25. La buse de sortie 25 peut pivoter autour d'un axe horizontal. La partie de la buse 25 située à l'intérieur du couvercle présente une ouverture 32 sur une partie de sa circonférence qui débouche, dans la position illustrée au dessin, dans le conduit 28. Lorsque la buse 25 est pivotée d'au moins un quart de tour, l'ouverture 32 n'est plus en regard du conduit 28 et le circuit de vapeur est ainsi fermé. Dans cette position, la vapeur sera dirigée à l'intérieur du récipient à travers le passage 30, le conduit 31 et le tube vapeur 11 et provoquera l'émulsification du liquide dans le récipient comme décrit précédemment. Une vis de réglage 33 agit par friction sur la buse de sortie 25 pour permettre son maintien en position pivotée et ainsi éviter tout changement de position intempestif.

Avec l'un ou l'autre des récipients décrits, la machine à café selon l'invention permet facilement d'émulsifier un liquide sans risque de projection de liquide lors de son utilisation.

## Revendications

1. Machine à café comprenant un réservoir d'eau, une pompe, un bloc thermique ainsi que des circuits d'acheminement d'eau chaude et de vapeur vers un embout de percolation (2), caractérisée par le fait qu'elle comporte un dispositif de distribution de vapeur (3) intégré comprenant une entrée de vapeur (12) reliée au circuit d'amenée de vapeur et une sortie de vapeur (10) ainsi que des moyens (13,14,17) permettant d'amener la sortie de vapeur (10) en contact avec une ouverture (9) d'un couvercle (4) obturant un récipient (5) contenant un liquide à chauffer ou à émulsifier.

2. Machine à café selon la revendication 1, caractérisée par le fait que lesdits moyens permettant d'amener la sortie de vapeur (10) en contact avec le couvercle (4) du récipient (5) sont constitués d'un corps creux (14) muni d'une ouverture radiale (15) et d'une pièce (13) pouvant se déplacer contre l'action d'un organe élastique à l'intérieur du corps (14), par l'intermédiaire d'un organe de commande entraîné par la surface externe du récipient (5).

3. Machine à café selon la revendication 2, caractérisée par le fait que l'organe de commande est constitué d'un doigt de commande (17) émergeant du bâti de la machine et pivoté autour d'un axe (18) dont une extrémité est solidaire du corps (14) et dont l'autre extrémité conformée comme un bec (22) agit sur un micro interrupteur commandant la production de vapeur et par le fait que ce doigt de commande (17) est déplacé par la paroi latérale du récipient lorsque celui-ci est en position de service définie par les moyens de guidage (7,8) de la machine.

4. Machine à café selon l'une des revendications précédentes, caractérisée par le fait que le couvercle (4) du récipient (5) comporte un tube de vapeur (11) connecté à l'ouverture (9) du couvercle (4) et dirigé vers l'intérieur du récipient (5).

5. Machine à café selon l'une des revendications précédentes, caractérisée par le fait que le couvercle (4) du récipient (5) comprend des moyens permettant l'aspiration du liquide par le tube (11) et son acheminement vers une buse de sortie (25) par effet venturi.

6. Machine à café selon l'une des revendications précédentes, caractérisée par le fait que lesdits moyens sont constitués d'une chambre d'admission (27) communiquant dans sa partie supérieure avec un conduit (31) relié au tube de vapeur (11) et dans sa partie inférieure à un conduit (28) débouchant dans une ouverture (32) de la buse de sortie (25).

7. Machine à café selon la revendication 5, caractérisée par le fait que la buse de sortie (25) est pivotée dans le couvercle (4) et par le fait que, suivant sa position relative par rapport au couvercle, elle permet ou non une liaison avec la chambre (27).

8. Machine à café selon l'une des revendications précédentes, caractérisée par le fait qu'elle comporte un socle (6) muni de moyens de guidage (7) et de butée (8) définissant un logement destiné à accueillir et à maintenir en position de service le récipient (5).

9. Récipient pour émulsifier un liquide, caractérisé par le fait qu'il comporte un couvercle (4) étanche présentant une ouverture (9) reliée à un tube de vapeur (11) s'étendant à l'intérieur du récipient, l'ouverture (9) du récipient étant destinée à être reliée à la sortie de vapeur d'une machine à café.

10. Récipient selon la revendication 9, caractérisé par le fait que l'ouverture (9) du couvercle (4) est reliée à une chambre d'admission (27) elle-même reliée d'une part à une buse de sortie (25) et d'autre part par un venturi au tube de vapeur (11).

11. Récipient selon la revendication 10, caractérisé par le fait que la buse de sortie (25) est montée pivotante dans le couvercle (4) du récipient (5) et par le fait que suivant sa position relative par rapport à ce couvercle une liaison avec la chambre d'admission (27) est obturée ou non.

12. Récipient selon l'une des revendication 9 à 11, caractérisé par le fait que son ouverture (9) est conformée de manière à être automatiquement reliée à la sortie vapeur d'une machine à café selon l'une des revendications 1 à 8 lors de la mise en place du récipient sur cette machine.
